# EUROPEAN PATENT APPLICATION

(11) **EP 4 837 794 A1**
(43) Date of publication of application: **11.11.2026**
(21) Application number: 26177451.7
(22) Date of filing: 08.05.2026
(51) Int. Cl.: B60S 3/04, B01F 23/235, B08B 3/02

(54) **KIT FOR A SELF-SERVICE VEHICLE WASHING SYSTEM**

(30) Priority: 09.05.2025 IT 202500010545
(71) Applicant: Ma-Fra S.p.a., Baranzate (MI) 20021 (IT)
(72) Inventor: MATTIOLI, Marco, Baranzate (MI) (IT)
(74) Representative: Fisauli, Beatrice A. M.

(57) **Abstract**

The present invention concerns a kit (1) for self-service vehicle washing facilities comprising at least one first circuit (10) for the dispensing of a first liquid product in atomized form, said first circuit (10) comprising a first suction system (15), connected to first pumping means (11) to draw the first liquid product from a first removable container (16) positioned in a loading area (17), at least one second circuit (20) for the dispensing of a second liquid product in the form of foam comprising a second suction system (23), provided with a removable connection element (24), configured to be connected to a second removable container (25) and to draw the second liquid product, a control unit (50) and a housing (100) provided with a loading area (17) to house the first removable container (16), the first suction system (15) being arranged at said loading area (17) to draw the liquid.

## Description

The present invention relates to a kit for self-service washing facilities intended for the cleaning of vehicles, such as cars, vans, motorcycles, bicycles and the like. More particularly, the invention relates to a kit arranged for installation at a washing station within a self-service washing facility.

At present, washing one's own vehicles at a private home is becoming increasingly difficult, both because of the limited availability of suitable spaces and because of prohibitions imposed by municipal regulations or environmental rules. As a result, there has been a growing spread of self-service vehicle washing facilities, designed to allow users to carry out the cleaning operations independently, using dedicated equipment located at suitable operating stations.

Known self-service facilities generally comprise a plurality of washing stations, each provided with a parking area intended for the vehicle, made with a draining pavement adapted to convey the liquids towards systems for collecting and treating waste water.

Each station is equipped at least with a high-pressure lance connected to a hydraulic circuit fed by a pump, which allows the dispensing of water, sometimes mixed with specific detergents, at high pressure. Systems for the application of detergent foam are also frequently provided, obtained by controlled mixing of compressed air and a chemical solution through suitable metering valves, in order to generate a dense and adhesive foam that promotes the cleaning of the vehicle surfaces.

For the final rinsing, it is common to adopt water treated by reverse osmosis, coming from a dedicated storage tank, so as to prevent the formation of stains or halos due to mineral residues.

The facility further comprises a technical unit that houses the water dispensing pumps, the tanks of detergents and auxiliary products, the water treatment systems and the control electronics, responsible for the automatic management of the washing cycles.

Users can select and start the various programs by means of control panels provided with automatic payment systems, such as coin acceptors, credit or prepaid card readers and terminals for digital payments.

Although such facilities are generally efficient, they present some drawbacks which the present invention intends to overcome.

In particular, one of the main problems of the known self-service facilities is that the user, in most cases, is not informed about the brand and the characteristics of the products used, especially the detergents. Consequently, the user is not able to assess the quality of the products used, nor can he know, for example, whether these are too aggressive and potentially harmful to certain parts or materials of the vehicle, or whether they are ineffective in removing dirt.

This problem is particularly felt by a growing class of users attentive to the care and preservation of their own vehicle, who require safe and effective washing solutions. In the absence of information and possibility of choice, some users resort to the expedient of using their own products, brought from home, during the washing operations at the self-service stations. However, this practice is often prohibited by the facility regulations and, in any case, entails considerable disadvantages. Such products, in fact, must be applied manually, by means of sprayers or cloths, with a consequent increase in washing times and a reduction in the overall effectiveness of the treatment.

The present invention therefore aims to offer an innovative solution capable of meeting such needs, improving the quality of the washing service, so as to obtain a more satisfied clientele, and optimizing the efficiency of the operations.

In this context, a first object of the present invention is to propose a kit for self-service vehicle washing facilities that allows the user to select and use detergent products of his own choice during the washing operations at the self-service stations.

More in detail, it is an object of the invention to provide a kit that allows the user to use his own products, for example brought from home, or products that can be purchased directly at the washing facility.

A further object of the present invention is to provide a kit that is easily installable at existing self-service washing facilities, without the need for significant structural interventions or modifications.

It is also an object of the present invention to provide a kit that allows the facility operators to expand their range of services, attract a wider clientele and, consequently, maximize the economic revenues deriving from the operation of the facilities themselves.

These and other objects are achieved by a kit for a self-service vehicle washing system, in accordance with claim 1.

More in detail, the present invention relates to a kit for self-service vehicle washing facilities, configured to allow a selective dispensing of one or, preferably, several dispensings of the same or of different liquid products, in particular detergents, in atomized form or in the form of foam, in a simple and customizable manner by a user.

According to a first aspect of the invention, the kit comprises at least one first circuit dedicated to the dispensing of a first liquid product in atomized form.

Said first circuit includes first pumping means, associated with first suction means configured to draw the first liquid product from a loading area arranged for the positioning of a container holding said first liquid product.

The first suction means are functionally connected to the first pumping means, which in turn feed first dispensing means configured to atomize and distribute the first liquid product.

The kit further comprises at least one second circuit, distinct from the first, configured for the dispensing of a second liquid product in the form of foam. Said second circuit comprises second pumping means, arranged to be connected at the inlet to a water supply source, and second suction means provided with removable connection means, adapted to allow the functional and removable connection of a container holding the second liquid product.

The second suction means are configured to draw the product from the relevant container and convey it, together with the water, towards second dispensing means. The latter are designed to mix the water with the second liquid product and to dispense the resulting mixture in the form of foam.

In a particular configuration, the second dispensing means and the second suction means are integrated in a hand-held device, for example a lance or a manual gun. The connection of the container of the second liquid product therefore takes place directly on said hand-held device.

The first liquid product and the second liquid product may comprise any detergent product or other type of product intended for the treatment of the bodywork and of all the other parts of the vehicle. For example, said first and second liquid products may be acidic or alkaline products, widely used for the cleaning of vehicles.

It should be specified that the first and the second liquid product need not necessarily be different, that is, the same product (detergent or other) may be used indifferently in the first circuit or in the second circuit and dispensed in the form of foam or atomized.

The kit further comprises an electronic control unit, configured to govern the operation of at least the first and the second pumping means. Said control unit typically is also responsible for the control of other components of the circuit intended for controlling the circulation and dispensing of the first and second liquid products and of the water, such as for example solenoid valves or devices for controlling pressure and/or flow rate, etc.

Said control unit is preferably associated with a command and control panel, by means of which the user can select the circuit to be activated and manage the dispensing operations.

The set of components is contained, at least in part, in a structural housing provided with means for resting on the ground and/or for fixing to a wall, such as to allow a simple and stable installation even in existing facilities. The housing is configured to accommodate at least the first and the second pumping means, as well as the control unit. Furthermore, it has at least one loading area specially shaped to allow the positioning and the removal of a removable container holding the first liquid product. In this configuration, the first suction means are arranged at said loading area, so as to be able to be inserted into the container and to carry out the suction of the liquid to be atomized.

The kit according to the present invention offers a series of significant advantages, both for the end user and for the operator of the self-service washing facility.

A first advantage lies in the possibility, offered to the user, of employing detergent products of his own choice, brought directly from home. In particular, the user can use his own liquid product, selected according to his own preferences and needs, and employ it within the dispensing circuit in atomized form or in the form of foam, depending on the configuration of the kit.

The kit according to the invention therefore offers the user the pleasure of being able to wash his own vehicle, whenever he wants, with his own products, taking advantage of the convenience of self-service facilities.

Alternatively, the kit is arranged to allow the use of products that can be purchased directly at the washing facility. For this purpose, vending machines may be provided distributed in the area of the facility, from which the user can select and purchase specific detergents, freely choosing among different brands and types according to the characteristics of his own vehicle and the desired level of cleanliness.

Such operational flexibility also allows the most demanding users to access the advantages offered by self-service washing, with the guarantee of employing known, controlled products of adequate quality. This results in an overall improvement in washing effectiveness, with the certainty that the detergents used are neither too aggressive nor ineffective, thereby avoiding potential damage to delicate materials or sensitive surfaces of the vehicle.

A further advantage lies in the ease of installation of the kit, which is designed to be integrated into existing facilities without the need for complex or costly structural interventions. The housing containing the main components may have reduced dimensions, such as to allow easy placement within the operating area of the washing station, even in limited spaces.

Thanks to the modular design of the system, the user can choose whether to directly use a personal container, to be placed in the dedicated loading area for the atomizing circuit, or to be connected to the suction means of the foaming circuit by means of suitable removable connection means. Alternatively, the user can pour his own product into dedicated containers already present in the kit, suitably arranged for the insertion and the suction of the liquid.

According to an aspect of the invention, the first and the second suction means comprise a flexible or rigid pipe adapted to be inserted inside the relevant
container, until it is immersed in the first or second liquid product. According to another aspect of the invention, the removable connection means of the second suction means may include portions shaped to couple with the mouth of the container, being provided with releasable locking means, for example of the screw, bayonet, snap-fit type or with elastic systems.

In a possible configuration, the first pumping means may consist of a pneumatic pump, connectable to a compressed air source. Similarly, the second pumping means may comprise a piston pump.

According to a variant of the present invention, the kit may further include a third circuit, configured for the dispensing of a third liquid product, diluted and distributed in atomized form or in the form of foam. Said third circuit comprises a tank intended to hold the pure liquid product, pumping and mixing means connected to the tank and to a water source, adapted to mix and dilute the product with the water and to pressurize the resulting mixture, as well as third dispensing means configured to distribute said mixture in the form of atomization or of foam.

The pumping and mixing means of the third circuit, as well as the relevant tank, are housed inside the main housing of the kit.

The third dispensing means may further be configured for connection to a compressed air source, in order to ensure the formation of foam with the desired characteristics.

The third liquid product is generally an alkaline or acidic product.

According to a variant, the third circuit may comprise two tanks for two pure liquid products, for example one acidic and one alkaline, alternatively dispensable by the third dispensing means in the form of atomized liquid or in the form of foam.

With this variant of the kit, it is possible to make available to the user one or two pure products, selected and supplied directly by the facility operator. Such products,
contained inside dedicated tanks housed in the housing of the kit, may be chosen according to the specific needs of the users and the technical characteristics of the vehicle to be treated. Thanks to the direct supply by the operator, it is possible to clearly indicate the brand and the type of the available products, thus ensuring transparency and reliability regarding the quality of the substances used. This aspect represents an element particularly appreciated by users who are especially attentive to the care of their own vehicles and often distrustful of anonymous or unidentifiable products, as commonly occurs in conventional self-service facilities.

In this way, even in the case where the user does not have his own personal product with him, the kit nevertheless allows access to products of recognized quality, specially selected to ensure washing effectiveness, safety for the treated surfaces and compatibility with the needs of prestige vehicles or of vehicles particularly sensitive to detergents.

In practice, the kit in the described configuration is configured as a true functional extension of the existing washing facility, conceived to meet the needs of the most demanding users, offering the possibility of using professional products, ready for use, easily selectable through the control panel and dispensed automatically and efficiently through the third circuit.

According to another aspect of the invention, the kit may further comprise an additional tap, connected to the water source, configured to allow the user to fill a bucket or to rinse personal tools such as brushes, sponges or other implements used during the washing operations.

Other characteristics and advantages will become more apparent from the indicative, and therefore non-limiting, description of an example of a preferred but non-exclusive embodiment of the invention, as illustrated in the accompanying figures in which:
figure 1 is a representation of a schematic view of the circuit of the kit according to the present invention;
   - figure 2 is a representation of a front view of the kit according to the present invention;
   - figure 3 is a representation of a side view of the kit according to the present invention.
   - With reference to figures 1, 2 and 3, a preferred embodiment of the kit for self-service vehicle washing facilities according to the present invention is now described.

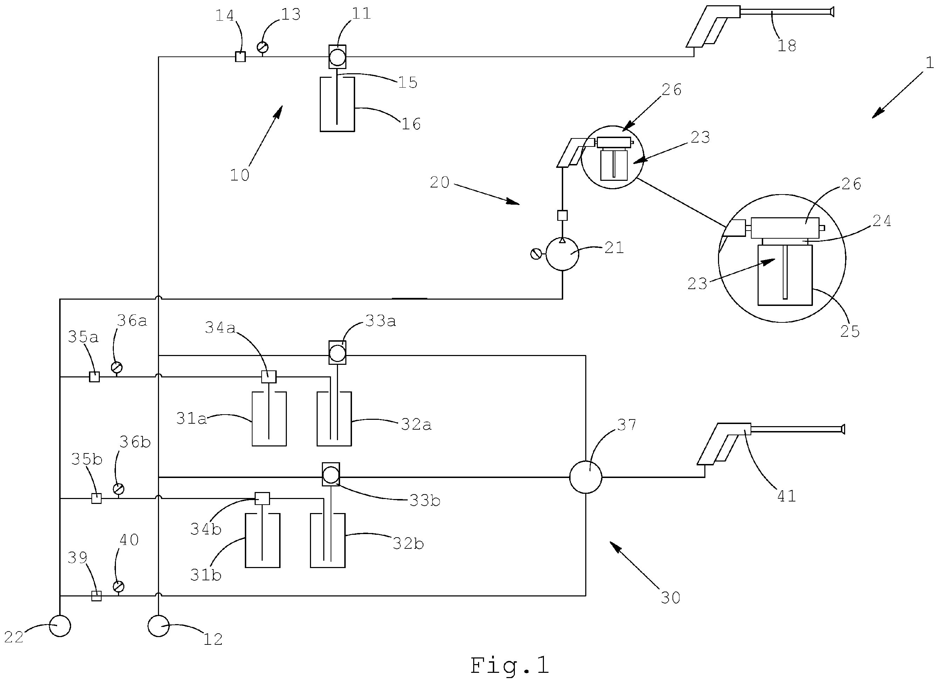

As represented in figure 1, the kit 1 comprises a first circuit 10, a second circuit 20 and a third circuit 30, each intended for the dispensing of one or more liquid products in atomized form or in the form of foam.

The first circuit 10 is configured to allow the dispensing of a first liquid product in atomized form. The first circuit 10 comprises a pneumatic pump 11, connected to a compressed air source 12 through an air pressure regulator 13 and a control solenoid valve 14. The pneumatic pump 11 is connected to a suction system 15, arranged to draw the first liquid product from a removable container 16, inserted in a loading area 17. The first circuit 10 further comprises a dispensing device 18 configured for the atomization of the product.

The second circuit 20 is configured to dispense a second liquid product in the form of foam. The second circuit 20 comprises a piston pump 21 fed by a water source 22. The piston pump 21 is connected to a suction system 23 provided with a removable connection element 24, adapted to allow the direct connection to a removable container 25 supplied by the user or by the facility. The second circuit 20 further comprises a dispensing device 26 configured to mix the second liquid product with water and to generate foam.

The third circuit 30 comprises two tanks for pure products 31a and 31b, two tanks for the diluted products 32a and 32b, two pneumatic pumps 33a and 33b, two hydrominder-type mixers 34a and 34b, two control solenoid valves 35a and 35b and two air pressure regulators 36a and 36b.

Each pneumatic pump 33a, 33b receives compressed air regulated respectively by the regulators 36a, 36b and controlled by the solenoid valves 35a, 35b. Each mixer 34a, 34b receives at its inlet a pure product from the tanks 31a, 31b and water from the water source 22, obtaining at the outlet a diluted mixture that is transferred to the tanks 32a, 32b.

The pneumatic pumps draw the respective diluted liquid products and convey them towards a multi-way switching valve 37, configured to select one of the two diluted products. The valve 37 is connected to the compressed air source 12 through a further control solenoid valve 39 and a pressure regulator 40, and is arranged to mix the selected product with air, thus generating a foam to be conveyed towards a dispensing device 41.

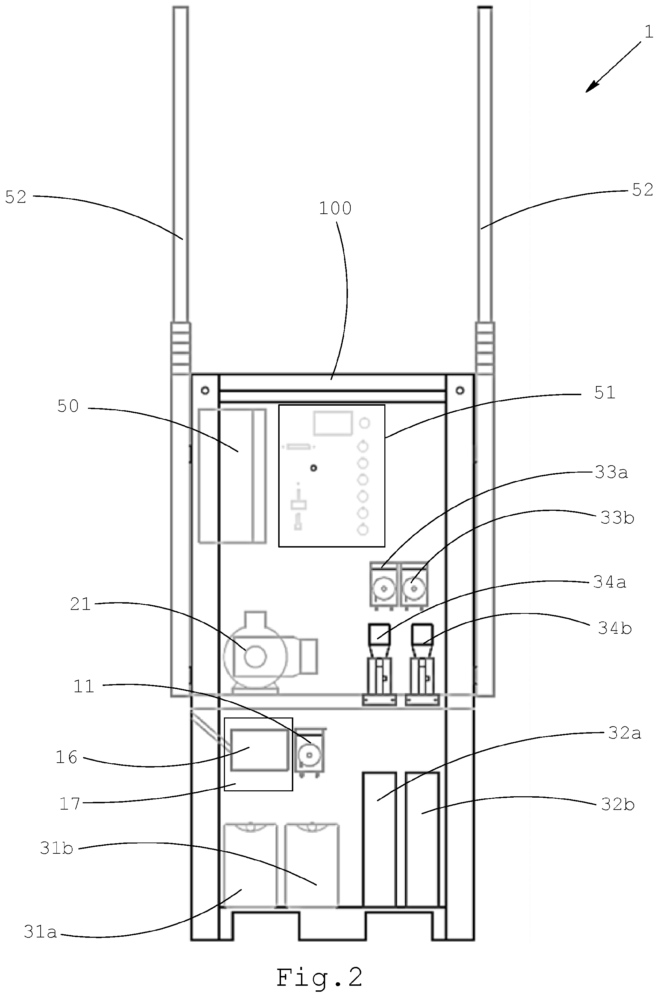

As illustrated in figure 2, the kit 1 is contained in a housing 100 having an overall cabinet shape. Inside the housing 100 are accommodated the piston pump 21 of the second circuit 20, the pneumatic pump 11 of the first circuit 10 (arranged in the vicinity of the loading area 17), the tanks for pure products 31a and 31b, the tanks for the diluted products 32a and 32b, the pneumatic pumps 33a and 33b, the mixers 34a and 34b. The control solenoid valves and the pressure regulators are not illustrated in figure 2.

The housing 100 further contains a control unit 50, associated with a control panel 51 accessible from the front.

On the sides of the housing 100 extend two support arms 52, configured to support and guide the flexible pipes (not illustrated in the figure) that connect the various circuits to the respective dispensing devices 18, 26 and 41.

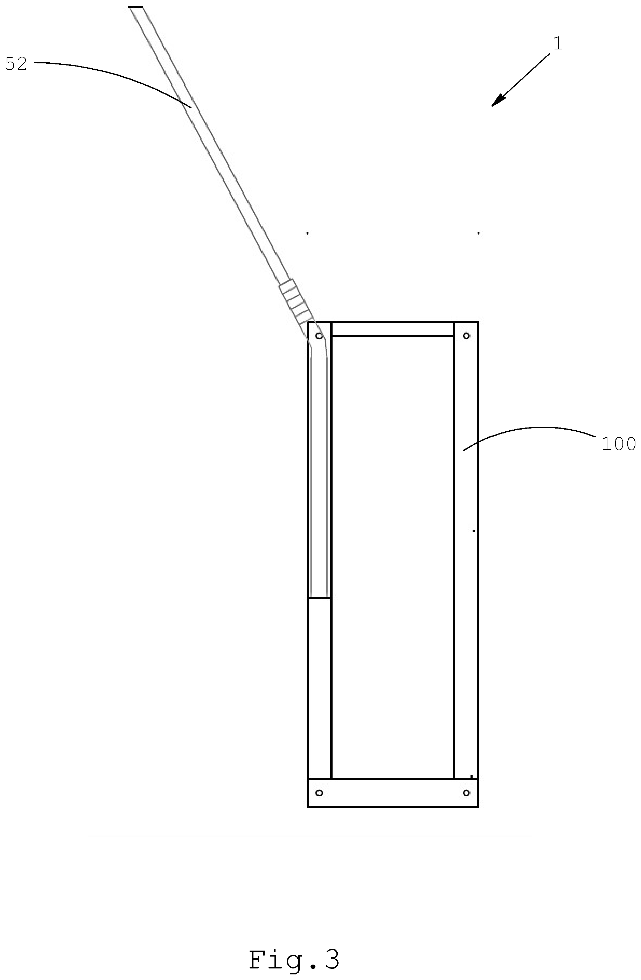

Figure 3 represents a side view of the housing 100 and shows one of the sides
of the cabinet, highlighting one of the support arms 52. This view highlights the compactness of the kit 1, which allows its installation even in limited spaces within the operating areas of the washing stations.of the cabinet, highlighting one of the support arms 52. This view highlights the compactness of the kit 1, which allows its installation even in limited spaces within the operating areas of the washing stations.

The present invention, as described and illustrated, is susceptible to numerous modifications and variants, all falling within the scope of the inventive concept; furthermore, all the details may be replaced by other technically equivalent elements.

## Claims

1. A kit (1) for self-service vehicle washing facilities, configured to allow the dispensing of at least one liquid product in atomized form and/or in the form of foam, comprising:
- at least one first circuit (10) for the dispensing of a first liquid product in atomized form, said first circuit (10) comprising:
- first pumping means (11);
- a first suction system (15), connected to the first pumping means (11), configured to draw the first liquid product from a first removable container (16) positioned in a loading area (17); and
- a first dispensing device (18) configured to atomize the first liquid product;
- at least one second circuit (20) for the dispensing of a second liquid product in the form of foam, said second circuit (20) comprising:
- second pumping means (21), fed by a water source (22);
- a second suction system (23), provided with a removable connection element (24), configured to be connected to a second removable container (25) and to draw the second liquid product; and
- a second dispensing device (26), connected to the second pumping means (21) and to the second suction system (23), configured to mix the second liquid product with water and to dispense the mixture in the form of foam;
wherein the second suction system (23) and the second dispensing device (26) are integrated in a hand-held device;
- a control unit (50), configured to control at least the first pumping means (11) and second pumping means (21), said control unit (50) being associated with a control panel (51);
- a housing (100), provided with ground-resting means and/or wall-fixing means, configured to contain at least the first pumping means (11), the second pumping means (21) and the control unit (50);
said housing (100) being provided with at least one loading area (17), shaped to allow the positioning and the removal of the first removable container (16) holding the first liquid product, the first suction system (15) being arranged at said loading area (17) to draw the liquid.

2. The kit according to claim 1, **characterized in that** said first suction system (15) and second suction system (23) comprise a flexible or rigid pipe adapted to be inserted into the respective container (16, 25) and to be immersed respectively in the first or in the second liquid product.

3. The kit according to any one of the preceding claims, **characterized in that** said removable connection element (24) comprises a coupling portion shaped to interface with a mouth of the second removable container (25), said portion being provided with releasable locking means, selected from: screw, bayonet, snap-fit locking or by means of elastic means.

4. The kit according to any one of the preceding claims, **characterized in that** said first pumping means (11) comprise a pneumatic pump configured to be connected to a compressed air source (12).

5. The kit according to any one of the preceding claims, **characterized in that** said second pumping means (21) comprise a piston pump.

6. The kit according to any one of the preceding claims, **characterized in that** it further comprises a third circuit (30) for the dispensing of at least one third liquid product, configured to dispense a diluted mixture in atomized form or in the form of foam, said third circuit (30) comprising:
- a third tank (31a, 31b) for holding the third pure liquid product;
- third pumping and mixing means (33a, 33b and 34a, 34b), connected to the tank (31a, 31b) and to a water source (22), adapted to mix the third liquid product with water and to pressurize the mixture;
- third dispensing means (41), configured to dispense said mixture in atomized form or in the form of foam.

7. The kit according to claim 6, **characterized in that** said third pumping and mixing means (33a, 33b; 34a, 34b), as well as the third tank (31a, 31b), are housed inside the housing (100).

8. The kit according to claim 6 or 7, **characterized in that** said third dispensing means (41) are configured to be connected to a compressed air source (12), in order to dispense the third liquid product in the form of foam.

9. The kit according to any one of the preceding claims, **characterized in that** it comprises a further tap fed by the water source (22).
